**Europäisches Patentamt**

**European Patent Office**

**Office européen des brevets**

(19)

(11) Veröffentlichungsnummer : **0 157 916 B2**

# (12) NEUE EUROPÄISCHE PATENTSCHRIFT

(45) Veröffentlichungstag der neuen Patentschrift :
**29.07.92 Patentblatt 92/31**

(21) Anmeldenummer : **84114219.3**

(22) Anmeldetag : **24.11.84**

(51) Int. Cl.⁵ : **G01D 5/20**

(54) **Analoger Wegsensor.**

(30) Priorität : **23.03.84 DE 3410736**

(43) Veröffentlichungstag der Anmeldung :
**16.10.85 Patentblatt 85/42**

(45) Bekanntmachung des Hinweises auf die
Patenterteilung :
**11.05.88 Patentblatt 88/19**

(45) Bekanntmachung des Hinweises auf die
Entscheidung über den Einspruch :
**29.07.92 Patentblatt 92/31**

(84) Benannte Vertragsstaaten :
**DE FR GB SE**

(56) Entgegenhaltungen :
**DE-A- 1 490 684**
**DE-A- 1 673 938**
**DE-A- 2 726 132**
**DE-A- 3 128 656**
**DE-A- 3 131 521**
**DE-B- 1 025 157**
**DE-B- 1 490 681**

(73) Patentinhaber : **WABCO Westinghouse
Fahrzeugbremsen GmbH
Am Lindener Hafen 21 Postfach 91 12 80
W-3000 Hannover 91 (DE)**

(72) Erfinder : **Abel, Joachim
Im Grossen Buchenfeld 13
W-3000 Hannover 1 (DE)**
Erfinder : **Müller, Michael
An der Tiefenriede 38
W-3000 Hannover 1 (DE)**
Erfinder : **Neuhaus, Detlef
Heinkenstrasse 1
W-3012 Langenhagen (DE)**
Erfinder : **Lichtenberg, Wolfgang
Ossietzkyring 32
W-3000 Hannover (DE)**
Erfinder : **Hesse, Karl-Heinz
Kuckucksbusch 8
3007 Gehrden (DE)**

(74) Vertreter : **Schrödter, Manfred
WABCO Westinghouse Fahrzeugbremsen
GmbH Am Lindener Hafen 21 Postfach 91 12
80
W-3000 Hannover 91 (DE)**

EP 0 157 916 B2

## Beschreibung

Die Erfindung bezieht sich auf einen analogen Wegsensor gemäss dem Oberbegriff des Patentanspruchs 1.

Solche Wegsensoren sind in vielen Ausführungsarten und Funktionsprinzipien herstellbar. Ein Beispiel ist aus der DE-OS-1673938 bekannt. In der dort beschriebenen Anordnung ist ein rechteckiges Eisenjoch mit zwei Luftspalten versehen. In dem einen Luftspalt ist ein magnetfeldempfindliches Element angeordnet. In den anderen Luftspalt ist ein Regulierstück einführbar. Je nachdem, wie tief das Regulierstück in den Luftspalt eingeführt ist, ändert sich der durch einen im Joch eingefügten Dauermagneten erzeugte magnetische Fluss. Die Flussänderung wird durch das magnetfeldempfindliche Element erkannt und in eine wegabhängige elektrische Spannung umgeformt.

Nachteilig an dieser Anordnung ist der relativ grosse Platzbedarf. Weiter sind nur kleine Wege messbar.

Der Erfindung liegt die Aufgabe zugrunde, einen Wegsensor der eingangs genannten Art anzugeben, der sich besonders raumsparend in ein insbesondere zylindrisches Gehäuse einbauen lässt, und auch für die Messung relativ grosser Wege geeignet ist.

Diese Aufgabe wird durch die im Patentanspruch 1 angegebene Erfindung gelöst. Die abhängigen Ansprüche enthalten zweckmässige Weiterbildungen und Ausführungsformen der Erfindung.

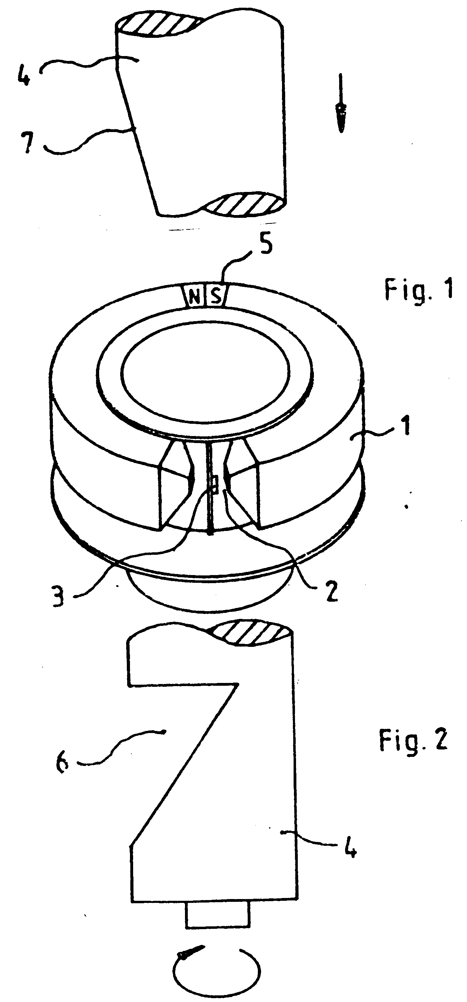

Die Erfindung wird im folgenden anhand einer Zeichnung näher erläutert. Die Zeichnung zeigt in Figur 1 einen erfindungsgemäss aufgebauten Wegsensor und in

Figur 2 eine besondere Ausbildung des Kerns, die eine Verwendung als Drehsensor ermöglicht. Der in Figur 1 dargestellte Wegsensor besteht aus einem ringförmigen magnetisierten Anker 1. Der Anker 1 ist mit einem Luftspalt 2 versehen, in dem ein magnetfeldempfindliches Element 3 eingefügt ist. Als magnetfeldempfindliches Element 3 kann entweder ein Hall-Sensor oder ein magnetfeldabhängiger Wiederstand verwendet werden. Der Anker 1 kann entweder insgesamt als Dauermagnet ausgebildet sein, oder es kann in den Anker 1 ein separater Dauermagnet 5 eingefügt sein.

Als bewegliches Teil des Wegsensors dient ein stabförmiger Eisenkern 4, der in den feststehenden ringförmigen Anker 1 eintauchbar ist. Der stabförmige Kern 4 ist am vorderen Ende konisch zugespitzt. Je nachdem wie weit der Kern 4 in den Anker 1 eingeführt wird, ändert sich der magnetische Fluss im Anker 1. Dieser wird durch das magnetfeldempfindliche Element 3 erfasst und in eine wegabhängige Spannung umgesetzt.

Die Funktionsweise des erfindungsgemässen Sensors unterscheidet sich wesentlich vom Stand der Technik. Im nicht eingetauchten Zustand des axial zum Anker 1 bewegbaren Kerns 4 geht der grösste Teil des Magnetenflusses durch den Anker 1 und durch das magnetfeldempfndliche Element 3 hindurch. Im voll eingetauchten Zustand des Kerns 4 wird dagegen ein grosser Teil des magnetischen Flusses über den Kern 4 kurzgeschlossen, so dass durch das magnetfeldempfndliche Element 3 nur noch ein sehr viel geringerer Teil des Flusses hindurchgeht.

Für eine einwandfreie Funktionsweise des Wegsensors ist es zweckmässig, den Kern 4 konzentrisch zum ringförmigen Anker 1 zu führen. Im voll eingetauchten Zustand verbleibt dann ein gleichmässiger ringförmiger Luftspalt zwischen dem Kern 4 und dem Anker 1. Eine leicht seitliche Verschiebung des Kerns 4 bezüglich zum Anker 1 ist jedoch, wie Versuche ergeben haben, unkritisch, da der magnetische Widerstand für den kurzgeschlossenen Magnetfluss nicht wesentlich verändert wird.

Gemäss einer Weiterbildung der Erfindung ist der Kern 4 mit einer Fläche 7 versehen. Hierdurch ist der Querschnitt des Kerns 4 nicht mehr kreisförmig, und der Anteil des kurzgeschlossenen magnetischen Flusses hängt von der Stellung der Fläche 7 ab. Mit Hilfe der Fläche 7 ist es deshalb möglich, durch eine leichte Drehung des Kerns 4 die Empfindlichkeit des Sensors zu justieren. Nach einer solchen Justierung wird dann der Kern in radialer Richtung fixiert und ist nur noch in axialer Richtung zu bewegen.

Gemäss einer weiteren Ausbildung der Erfindung ist der Kern 4 mit einer Ausnehmung 6 versehen (Fig. 2). In dieser Ausführung bleibt der Kern 4 stets innerhalb des ringförmigen Ankers 1. Durch eine Drehung des Kerns 4 relativ zum Anker 1 lässt sich dann der oben erläuterte magnetische Kurzschluss verändern. Hierdurch ist ein Drehsensor realisierbar.

Der beschriebene Wegsensor lässt sich besonders vorteilhaft und platzsparend in ein zylindrisches Gehäuse einbauen. Der Sensor ist preiswert zu fertigen und wenig störanfällig, da der bewegliche Teil keine aktiven Bauelemente enthält. Der Sensor ist für direkte Ansteuerung, auch mit einer hohen Stossbeschleunigung und grossem Hub, gut geeignet. Er kann beispielsweise in einer Niveauregulierung für Kraftfahrzeuge verwendet werden.

**Patentansprüche**

1. Analoger Wegsensor zur Messung der Verschihiebung oder Verdrehung eines magnetisch leitfähigen, stabförmigen Kernes (4) mit folgenden Merkmalen:

a) Es ist ein ringförmiger magnetisierter Anker (1) vom Typ eines Dauermagneten oder mit einem eingefügten Dauermagnet (5) vorgesehen

b) der Anker (1) weist einen Luftspalt (2) auf;

c) im Luftspalt (2) ist ein magnetfeldempfindliches Element (3) angeordnet;

d) der Kern (4) ist zentral im Anker (1) angeordnet oder zentral in den Anker (1) eintauchbar;

e) der Kern (4) ist Konisch ansgebildet und/oder weist eine Abflachung (7) auf und/oder ist mit einer Ausnehmung (6) versehen.

2. Sensor nach Anspruch 1 <u>dadurch gekennzeichnet</u>, daß das magnetfeldempfindliche Element (3) ein Hall-Sensor oder ein magnetfeldabhängiger Widerstand ist.

3. Sensor nach wenigstens einem der vorhergehenden Ansprüche, <u>dadurch gekennzeichnet</u>, daß der Kern (4) axial bezüglich des Ankers (1) verschiebbar ist.

4. Sensor nach wenigstens einem der vorhergehenden Ansprüche, <u>dadurch gekennzeichnet</u>, daß der Kern (4) bezüglich des Ankers (1) drehbar ist.

5. Sensor nach wenigstens einem der vorhergehenden Ansprüche, <u>dadurch gekennzeichnet</u>, daß der Kern (4) konzentrisch zu dem Anker (1) angeordnet ist.

**Claims**

1. Analog movement sensor for measuring the displacement or torsion of a magnetically conductive, rod-like core (4), having the following features:

a) an annular magnetised armature (1) of the permanent-magnet type or fitted with a permanent magnet (5) is provided;

b) the armature (1) has an air gap (2);

c) arranged in the air gap (2) is a magnetic-field-sensitive element (3);

d) the core (4) is arranged in the centre of the armature (1) or can be inserted into the centre of the armature (1),

e) the core (4) is of conical design and/or has a flattened portion (7) and/or is provided with a cut-out portion (6).

2. Sensor according to claim 1, <u>characterised in that</u> the magnetic-field-sensitive element (3) is a Hall effect device or a magnetic-field-dependent resistor.

3. Sensor according to at least one of the preceding claims, <u>characterised in that</u> the core (4) is axially displaceable with respect to the armature (1).

4. Sensor according to at least one of the preceding claims, <u>characterised in that</u> the core (4) is rotatable with respect to the armature (1).

5. Sensor according to at least one of the preceding claims, <u>characterised in that</u> the core (4) is arranged concentrically with respect to the armature (1).

**Revendications**

1. Capteur de course analogique destiné à mesurer la translation ou la rotation d'un noyau (4) conducteur du magnétisme, en forme de barreau, présentant les particularités suivantes :

a) il est prévu une armature aimantée annulaire (1) du type d'un aimant permanent ou dans laquelle est intercalé un aimant permanent ;

b) l'armature (1) présente un entrefer (2) ;

c) un élément sensible au champ magnétique (3) est disposé dans l'entrefer (2) ;

d) le noyau (4) est disposé dans l'armature (1) en position centrale ou peut plonger dans l'armature (1) dans une position centrale ;

e) le noyau (4) est de configuration conique et/ou présente un méplat (7) et/ou est muni d'un évidement (6).

2. Capteur selon la revendication 1, <u>caractérisé en ce que</u> l'élément sensible au champ magnétique (3) est un capteur de Hall ou une résistance sensible au champ magnétique.

3. Capteur selon au moins l'une des revendications précédentes, <u>caractérisé en ce que</u> le noyau (4) est mobile en translation axiale par rapport à l'armature (1).

4. Capteur selon au moins l'une des revendications précédentes, <u>caractérisé en ce que</u> le noyau (4) peut tourner par rapport à l'armature (1).

5. Capteur selon au moins l'une des revendications précédentes, <u>caractérisé en ce que</u> le noyau (4) est disposé concentriquement à l'armature (1).

Fig. 1

Fig. 2